(19) Europäisches Patentamt
European Patent Office
Office européen des brevets

(11) **EP 4 786 928 A1**

(12) **EUROPÄISCHE PATENTANMELDUNG**

(43) Veröffentlichungstag:
    **05.08.2026 Patentblatt 2026/32**

(21) Anmeldenummer: **26151991.2**

(22) Anmeldetag: **15.01.2026**

(51) Internationale Patentklassifikation (IPC):
    **G01F 1/66** *(2022.01)*    **G01F 1/667** *(2022.01)*
    **G01F 1/74** *(2006.01)*    **G01N 29/024** *(2006.01)*

(52) Gemeinsame Patentklassifikation (CPC):
    **G01F 1/668; G01F 1/66; G01F 1/74; G01N 29/024;**
    G01N 2291/02809

(84) Benannte Vertragsstaaten:
    **AL AT BE BG CH CY CZ DE DK EE ES FI FR GB GR HR HU IE IS IT LI LT LU LV MC ME MK MT NL NO PL PT RO RS SE SI SK SM TR**
    Benannte Erstreckungsstaaten:
    **BA**
    Benannte Validierungsstaaten:
    **GE KH LA MA MD TN**

(30) Priorität: **03.02.2025 DE 102025103920**

(71) Anmelder: **Diehl Metering GmbH**
    **91522 Ansbach (DE)**

(72) Erfinder:
    • **Balbach, Thomas**
      **90489 Nürnberg (DE)**
    • **Hofmann, Alexander**
      **91623 Sachsen (DE)**
    • **Ritter, Steffen**
      **91572 Bechhofen (DE)**

(74) Vertreter: **Diehl Patentabteilung**
    **c/o Diehl Stiftung & Co. KG**
    **Stephanstraße 49**
    **90478 Nürnberg (DE)**

(54) **COMPUTERIMPLEMENTIERTES VERFAHREN ZUR ERMITTLUNG EINER GEMISCHINFORMATION UND DURCHFLUSSZÄHLEREINRICHTUNG**

(57)    Die Erfindung betrifft ein computerimplementiertes Verfahren zur Ermittlung einer Gemischinformation, die die Zusammensetzung eines Gemischs (18) aus wenigstens zwei Fluiden beschreibt, für eine Durchflusszählereinrichtung zur Ermittlung eines Durchflusses des Gemischs, wobei die Durchflusszählereinrichtung eine Ultraschallmesseinrichtung (13) zur Ermittlung des Gemischdurchflusses durch eine Laufzeitmessung und eine Temperaturmesseinrichtung (16) zur Ermittlung wenigstens einer Temperatur des Gemischs (18) aufweist, wobei

- ein Ermittlungszusammenhang zwischen der Schallgeschwindigkeit in dem Gemisch (18) und der Temperatur in dem Gemisch (18) als Eingangsdaten zu wenigstens einem Zusammensetzungswert der Zusammensetzungsinformation bereitgestellt wird, der wenigstens unterhalb einer Grenztemperatur (1) eindeutig ist,
- in wenigstens einem vorgegebenen Messzeitraum ein Ermittlungsvorgang zur Ermittlung der Zusammensetzungsinformation dann gestartet wird, wenn eine Messbedingung erfüllt ist, die wenigstens überprüft, ob die Temperatur des Gemischs (18) unterhalb der Grenztemperatur (1) liegt,
- in dem Ermittlungsvorgang die aktuelle Schallgeschwindigkeit in dem Gemisch (11) mittels der Ultraschallmesseinrichtung (13) gemessen wird und mittels des Ermittlungszusammenhangs die Konzentrationsinformation bestimmt wird.

Fig. 2

Processed by Luminess, 75001 PARIS (FR)

EP 4 786 928 A1

**Beschreibung**

Die Erfindung betrifft ein computerimplementiertes Verfahren zur Ermittlung einer Gemischinformation, die die Zusammensetzung eines Gemischs aus wenigstens zwei Fluiden beschreibt, für eine Durchflusszählereinrichtung zur Ermittlung eines Durchflusses des Gemischs, insbesondere eine Energiezählereinrichtung zur Ermittlung des Energieverbrauchs in einem Temperierungskreislauf, in dem das Gemisch zirkuliert, wobei die Durchflusszählereinrichtung eine Ultraschallmesseinrichtung zur Ermittlung des Gemischdurchflusses durch eine Laufzeitmessung und eine Temperaturmesseinrichtung zur Ermittlung wenigstens einer Temperatur des Gemischs aufweist. Daneben betrifft die Erfindung eine Durchflusszählereinrichtung.

Energiezählereinrichtungen, beispielsweise Wärmezähler oder Kältezähler, sind eine besondere Ausgestaltung von Durchflusszählereinrichtungen und messen den Energieverbrauch W, beispielsweise basierend auf einer volumetrischen Flussmessung in Verbindung mit dem Temperaturabfall des Trägerfluids zwischen dem Vorlauf und dem Rücklauf ($T_{in}$-$T_{out}$). Zur Berechnung des Energieverbrauchs W wird dabei von der grundsätzlichen Gleichung

$$W = \int_{\Delta t} \rho \cdot c_p (T_{in} - T_{out}) Q \, dt \qquad (1)$$

ausgegangen. Darin bezeichnet $\rho$ die Dichte des Trägerfluids, $c_p$ die spezifische Wärmekapazität bei konstantem Druck des Trägerfluids, wobei das Produkt $\rho \cdot c_p$ üblicherweise als der k-Faktor bezeichnet wird und Q der Durchfluss ist.

Im Stand der Technik wurde bereits vorgeschlagen, als Trägerfluid Gemische verschiedener Fluide, insbesondere verschiedener Flüssigkeiten, einzusetzen. Ein typisches Beispiel sind Wasser-Glykol-Mischungen, das bedeutet, Gemische aus Wasser und einem Glykol als weiterer Flüssigkeit. Dabei sind Zwei-Komponenten-Gemische am gängigsten. Wasser-Glykol-Mischungen sind kommerziell erhältlich, und zwar zum einen als benutzungsbereite Gemische, zum anderen als Glykolkonzentrate, die mit Wasser verdünnt werden müssen, um ein gewolltes Mischungsverhältnis zu erzielen. Zunehmend werden solche Energiezählereinrichtung auch zugelassen, beispielsweise in Deutschland.

Im Einsatz besteht dabei das Problem, dass das Mischungsverhältnis im Trägerfluid über die Zeit veränderlich sein kann. Gründe hierfür sind das Altern des Gemisches, ein Verlust von Trägerfluid, üblicherweise Wasser, durch Verdampfung für die Druckkompensation oder ein folgendes Wiederauffüllen verlorener Trägerflüssigkeit mit Wasser und/oder Glykol. Hierdurch werden die thermischen Eigenschaften des Trägerfluids verändert, woraus wiederum ein unmittelbarer Einfluss auf den gemessenen Energieverbrauch folgt.

Um gewisse Zertifizierungen für Energiezählereinrichtungen zu erhalten, müssten derartige Veränderungen im Trägerfluid grundsätzlich kompensierbar sein bzw. zumindest berücksichtigt werden. Daher wurde beispielsweise vorgeschlagen, jährlich die Glykolkonzentration zu überprüfen und entsprechend anzupassen, wenn die gemessene Konzentration um mehr als ein Prozent von der vorgegebenen Konzentration abweicht. Weiterhin kann vorgeschrieben werden, das Trägerfluid im Fall eines Druckabfalls im Temperierungskreislauf lediglich mit dem vorgegebenen Gemisch in dem vorgegebenen Mischungsverhältnis zu ergänzen.

Vergleichbare Probleme existieren auch bei reinen Durchflusszählereinrichtungen, in denen der Durchfluss eines solchen Gemisches gemessen wird.

EP 2 746 742 A1 betrifft eine Zählereinrichtung für thermische Energie, bei der die Konzentration einer Frostschutzsubstanz, insbesondere Glykol, in der Trägerflüssigkeit gemessen wird, um weitere Eigenschaften der Trägerflüssigkeit zu bestimmen. Bei der Materialeigenschaft kann es sich um die Schallgeschwindigkeit handeln.

WO 2012/065 276 A1 betrifft ein Verfahren zur Bestimmung des Wärmeflusses eines wärmetransportierenden Fluids, welches ein Gemisch aus wenigstens zwei unterschiedlichen Fluiden ist, wobei die Dichte und die spezifische Wärme des wärmetransportierenden Fluids durch Messung der Schallgeschwindigkeit in dem Fluid bestimmt werden. Die Dichte und die spezifische Wärme werden dann genutzt, um den Wärmestrom zu bestimmen. Konkret wird dabei eine Messung der Temperaturdifferenz und der Schallgeschwindigkeit herangezogen, um die Konzentration des Frostschutzfluids, insbesondere Glykols, zu bestimmen.

Als Durchflusszählereinrichtungen wurden im Stand der Technik auch bereits solche vorgeschlagen, die den volumetrischen Durchfluss mittels einer Ultraschallmesseinrichtung bestimmen. Dabei kann beispielsweise vorgesehen sein, eine Messanordnung mit zwei Ultraschalltransducern zu verwenden, von denen einer stromaufwärts ausgerichtet ist, der andere stromabwärts, und sich die Transducer in einem bekannten Abstand gegenüber liegen. Aus den Laufzeitdifferenzen der Ultraschallsignale entlang der Strecke in beiden Richtungen lässt sich, insbesondere unter Verwendung eines Kennfelds, das durchgeflossene Volumen des Trägerfluids, mithin der Gemischdurchfluss, bestimmen. Bei mit solchen Laufzeitdifferenzen arbeitenden Durchflusszählereinrichtungen wird üblicherweise ein für das Referenzgemisch, für das die Durchflusszählereinrichtung vorgesehen ist, und die Durchflusszählereinrichtung oder zumindest deren relevanten Aufbau spezifisches Kennfeld verwendet. Das Kennfeld nutzt als Eingabedaten beispielsweise einen als Laufzeitdifferenz gemessenen Laufzeitdifferenzwert und die Temperatur des Gemischs am Ort der Laufzeitmessung, um als Ausgangsdatum einen Ermittlungsfaktor zu ermitteln. Durch Multiplikation des Ermittlungsfaktors mit dem Laufzeitdifferenzwert kann dann der Gemischdurchfluss bestimmt werden.

Wie bereits dargelegt wurde, kann es über die Zeit zu einer Änderung des Gemischs kommen und/oder bereits unmittelbar eine Abweichung von dem Referenzgemisch auftreten. Das bedeutet, die bezüglich der Ultraschallmessung genutzten fluiddynamischen Eigenschaften des Trägerfluids, also Gemischs, müssen nicht mehr zwangsläufig denen des Referenzgemischs, auf das sich das Kennfeld bezieht, entsprechen, so dass es bei der Auswertung der Laufzeitmessung zu Fehlern bei der Bestimmung des Gemischdurchflusses kommen kann.

Bekannte und im Stand der Technik zugelassene Techniken zur Ermittlung der Zusammensetzung von Gemischen als Trägerfluid, insbesondere der Konzentration eines zusätzlich zu Wasser verwendeten Fluids, umfassen die Messung der Dichte des Gemischs und/oder eines optischen Brechungsindex des Gemischs, insbesondere mit zusätzlicher, aufwendiger Sensorik. Wird allerdings nachgewiesen, dass ein anderes Verfahren die gleiche Genauigkeit erreichen kann, darf auch diese Vorgehensweise verwendet werden. Beispielsweise muss nach der Norm DIN EN 1434, vergleiche Abschnitt 4.4, eine Zusammensetzung, insbesondere die Konzentration eines zusätzlich zu Wasser verwendeten Fluids, alle 12 Monate bestimmt werden und der Versorger muss sicherstellen, dass sich die Konzentration nicht mehr als um ein Prozent verändert hat.

Der Erfindung liegt daher die Aufgabe zugrunde, eine Möglichkeit zur robusten und hinreichend genauen Messung der Zusammensetzung eines als Trägerfluid verwendeten Gemischs aus wenigstens zwei Fluiden bei einer ultraschallbasierten Durchflusszählereinrichtung anzugeben.

Zur Lösung dieser Aufgabe ist bei einem Verfahren der eingangs genannten Art erfindungsgemäß vorgesehen, dass

- ein Ermittlungszusammenhang zwischen der Schallgeschwindigkeit in dem Gemisch und der Temperatur in dem Gemisch als Eingangsdaten zu wenigstens einem Zusammensetzungswert der Zusammensetzungsinformation bereitgestellt wird, der wenigstens unterhalb einer Grenztemperatur eindeutig ist,
- in wenigstens einem vorgegebenen Messzeitraum ein Ermittlungsvorgang zur Ermittlung der Zusammensetzungsinformation dann gestartet wird, wenn eine Messbedingung erfüllt ist, die wenigstens überprüft, ob die Temperatur des Gemischs unterhalb der Grenztemperatur liegt,
- in dem Ermittlungsvorgang die aktuelle Schallgeschwindigkeit in dem Fluid mittels der Ultraschallmesseinrichtung gemessen wird und mittels des Ermittlungszusammenhangs die Konzentrationsinformation bestimmt wird.

Im Rahmen der vorliegenden Erfindung wurde erkannt, dass die relevanten Änderungen in den fluiddynamischen Eigenschaften, die bei Abweichungen vom Referenzgemisch auftreten, durch die Schallgeschwindigkeit abgebildet werden können, so dass deren zusätzliche Bestimmung als Grundlage zur Ermittlung einer Zusammensetzungsinformation, die die Zusammensetzung des Gemischs aus den wenigstens zwei Fluiden beschreibt, geeignet ist. Es kann also ein Ermittlungszusammenhang ermittelt und bereitgestellt werden, der es erlaubt, der aktuellen Schallgeschwindigkeit und der aktuellen Temperatur des Gemischs, welche durch die Temperaturmesseinrichtung idealerweise am Ort der Schallgeschwindigkeitsmessung aufgenommen wird, eine Zusammensetzungsinformation zuzuordnen. Bevorzugt handelt es sich bei dem Gemisch um ein Wasser-Glykol-Gemisch. Beispielhafte Glykole, die sich als insbesondere geeignet für Energiezählereinrichtungen erwiesen haben, umfassen Monoethylenglykol und Monopropylenglykol. Allgemein kann es sich bei der Durchflusszählereinrichtung bevorzugt um eine Energiezählereinrichtung zur Ermittlung des Energieverbrauchs in einem Temperierungskreislauf, in dem das Gemisch zirkuliert, handeln. Die Energiezählereinrichtung wird üblicherweise entweder im Vorlauf oder im Rücklauf angeordnet, so dass die dort entsprechend ohnehin gemessene Temperatur (um die Temperaturdifferenz zwischen Vorlauf und Rücklauf zu ermitteln) als Temperatur des Gemischs verwendet werden kann. Auch ein zusätzlicher Temperatursensor an der Ultraschallmessstrecke ist aber grundsätzlich möglich.

Die aktuelle Schallgeschwindigkeit im aktuellen Gemisch kann dabei während des normalen Messvorgangs der Ultraschallmessvorrichtung, insbesondere sozusagen "on the fly", mitbestimmt werden, ohne dass hierdurch ein für Durchflusszählereinrichtungen zu hoher Aufwand entsteht. Insbesondere ist kein zusätzlicher Sensor nötig. Die Schallgeschwindigkeit kann aus einem Mittelwert oder einer Summe eines Laufzeitwerts einer Stromabwärts-Messung und eines Laufzeitwerts einer Stromaufwärts-Messung bei zwei in Flussrichtung gegenüberliegenden Ultraschalltransducern und/oder aus einer Messung bei unbewegtem Gemisch ermittelt werden. Insbesondere bietet sich in diesem Zusammenhang eine Messanordnung an, bei der in einem das Trägerfluid führenden Gefäß zwei Ultraschalltransducer angeordnet werden, die sich in Strömungsrichtung in einem bekannten Abstand versetzt gegenüberliegen, so dass eine Stromaufwärts-Messung und eine Stromabwärts-Messung möglich sind. Nachdem der Abstand zwischen dem sendenden Ultraschalltransducer und dem empfangenden Ultraschalltransducer bekannt ist, lässt sich die Schallgeschwindigkeit mit einer einfachen Messung der Laufzeit bei nicht bewegtem Gemisch ermitteln, oder aber, falls ein Fluss vorhanden ist, aus der Summe bzw. dem Mittelwert der Laufzeiten der Stromaufwärts- und der Stromabwärts-Messung. Auf diese Weise fallen flussinduzierte Effekte heraus. Microcontroller, die sowohl die absolute Laufzeit als auch Laufzeitdifferenzen für Zähleranwendungen bestimmen, sind im Stand der Technik bereits bekannt.

Eine ultraschallbasierte Durchflusszählereinrichtung kann mithin das arithmetische Mittel (stromaufwärts und stromabwärts) der absoluten Laufzeit des Ultraschallsignals, die Temperatur des Gemischs sowie, aus der Konstruktion bekannt, den Schalllaufweg des Ultraschallsignals liefern. Die Schallgeschwindigkeit ergibt sich dann als der Schalllaufweg geteilt durch das arithmetische Mittel der absoluten Laufzeit.

Die resultierende aktuelle Schallgeschwindigkeit kann dann zusammen mit der Temperatur des Gemischs, insbesondere Trägerfluids, zur Bestimmung der Zusammensetzungsinformation, insbesondere der Konzentration wenigstens eines der Fluide, herangezogen werden. Der Ermittlungszusammenhang kann dabei als Ermittlungsvorschrift verstanden werden, um aus der aktuellen Schallgeschwindigkeit und der aktuellen Temperatur des Gemischs die Zusammensetzungsinformation zu ermitteln. Dabei sind grundsätzlich verschiedene konkrete Ausgestaltungen des Ermittlungszusammenhangs denkbar, beispielsweise als ein Kennfeld oder dergleichen. Mit besonderem Vorteil jedoch kann der Ermittlungszusammenhangs eine die aktuelle Temperatur und die aktuelle Schallgeschwindigkeit mit wenigstens einem Zusammensetzungswert der Zusammensetzungsinformation verknüpfende Formel umfassen. Bezeichnet man mit $\sigma_f$ die Konzentration eines der Fluide, insbesondere eines Glykols in einer Wasser-Glykol-Mischung, mit $T_g$ die Temperatur des Gemischs und mit $c_g$ die Schallgeschwindigkeit des Gemischs, gilt dann grundsätzlich:

$$\sigma_f = f(c_g, T_g).$$

Koeffizienten der Funktion $f$ können empirisch, insbesondere anhand von Messreihen, bestimmt werden. Mit besonderem Vorteil, insbesondere für Wasser-Glykol-Gemische, kann die Funktion $f$ ein Polynom sein, insbesondere ein Polynom dritten Grades. Ein solches Polynom kann beispielsweise geschrieben werden als:

$$\sigma_f = aT_g^3 + bT_g^2 c_g + cT_g^2 + dT_g c_g^2 + eT_g c_g + fT_g + gc_g^3 + hc_g^2 + ic_g + j, \qquad (1)$$

worin a bis j bevorzugt durch Messreihen bestimmte Koeffizienten sind.

Hierbei wurde jedoch, insbesondere für die häufig verwendeten Wasser-Glykol-Gemische, festgestellt, dass der Ermittlungszusammenhang nicht für alle Werte der aktuellen Temperatur des Gemischs eindeutig ist. Vielmehr haben Versuche gezeigt, dass oberhalb einer gewissen Grenztemperatur Mehrdeutigkeiten auftreten, wodurch eine eindeutige Ermittlung des Zusammensetzungswerts, insbesondere der Glykol-Konzentration, nicht mehr möglich ist. Rein beispielhaft hat sich für Monoethylenglykol eine Grenztemperatur von ca. 52 °C ergeben, für Monopropylenglykol eine Grenztemperatur von ca. 48 °C.

Mithin wird erfindungsgemäß vorgeschlagen, den Ermittlungsvorgang für die Zusammensetzungsinformation geschickt so zu wählen, dass trotz des teilweise mehrdeutigen Ermittlungszusammenhangs die Zusammenhangsinformation robust und verlässlich eindeutig bestimmt werden kann. Insbesondere findet also die Ermittlung der Zusammenhangsinformation bei niedrigen Temperaturen, also unterhalb der Grenztemperatur, statt.

Zusammenfassend wird also für ultraschallbasierte Durchflusszählereinrichtungen, insbesondere Energiezählereinrichtungen, eine zusätzliche Funktionalität zur Bestimmung der Zusammensetzungsinformation ermöglicht, wobei die Eindeutigkeit des Ergebnisses durch die geschickte Wahl des Ermittlungszeitpunkts sichergestellt wird. Es ist kein zusätzliches Messverfahren mit zusätzlicher Ausrüstung, beispielsweise eine Dichtemessung und/oder eine Bestimmung des Brechungsindex, notwendig.

Mit besonderem Vorteil wird der Ermittlungszusammenhang gemischspezifisch, im Falle eines Wasser-Glykol-Gemischs insbesondere glykolspezifisch, bereitgestellt. Es hat sich gezeigt, dass sich die Ermittlungszusammenhänge für unterschiedliche Gemische, insbesondere unterschiedliche Glykole, unterscheiden können, was auch für die Grenztemperaturen, die zweckmäßigerweise dem jeweiligen Ermittlungszusammenhang zugeordnet bereitgestellt werden, gilt. Beispielsweise können Messreihen für unterschiedliche Glykole verwendet werden, um entsprechende glykolspezifische Ermittlungszusammenhänge, beispielsweise die Koeffizienten des beispielhaft genannten Polynoms, zu ermitteln.

Der Ermittlungszusammenhang kann beispielsweise vor oder bei Inbetriebnahme der Durchflusszählereinrichtung in einem Speichermittel der Durchflusszählereinrichtung hardcodiert werden. Ist bereits bekannt, für welches Gemisch eine Durchflusszählereinrichtung im Einsatz vorgesehen ist, kann der entsprechende Ermittlungszusammenhang bereits fest in einem Speichermittel der Durchflusszählereinrichtung abgelegt werden, insbesondere nicht zerstörungsfrei veränderbar, um diesbezüglich Modifikationen zu vermeiden.

Möglich ist es aber auch, den Ermittlungszusammenhang anhand einer Fluidinformation, die das Gemisch beschreibt, aus mehreren bereitstehenden Ermittlungszusammenhängen auszuwählen. Konkret kann hierbei vorgesehen sein, dass die Fluidinformation über ein Eingabemittel der Durchflusszählereinrichtung oder eine Kommunikationsschnittstelle der Durchflusszählereinrichtung empfangen wird. Die Fluidinformation gibt beispielsweise an, aus welchen Fluiden das Gemisch besteht, im Fall eines Wasser-Glykol-Gemischs beispielsweise das Glykol. Die Durchflusszählereinrichtung wird dann mit mehreren möglichen, gemischspezifischen Ermittlungszusammenhängen, die beispielsweise in dem Speichermittel der Durchflusszählereinrichtung abgelegt sein können, bereitgestellt, von denen einer, insbesondere einmalig, ausgewählt werden kann, je nachdem, für welches Gemisch die Durchflusszählereinrichtung eingesetzt werden soll.

Wie bereits erwähnt, kann die Zusammensetzungsinformation eine Konzentration eines der Fluide, insbesondere des Glykols, umfassen. Möglich ist es bei einer Energiezählereinrichtung zusätzlich oder alternativ jedoch auch, die Zusammensetzungsinformation einen Ermittlungsfaktor zur Ermittlung des Energieverbrauchs umfassend zu ermitteln, beispielsweise einen k-Faktor oder dergleichen zu ermitteln und beispielsweise bei der Energieverbrauchsberechnung entsprechend einzusetzen. Wird die Zusammensetzungsinformation, allgemein gesprochen, nicht unmittelbar oder zumindest nicht ausschließlich beim Betrieb der Durchflusszählereinrichtung eingesetzt, kann vorgesehen sein, sie über eine Kommunikationsverbindung an eine Servereinrichtung, beispielsweise eines Versorgers, zu übertragen. Moderne Durchflusszählereinrichtungen, insbesondere Energiezählereinrichtungen, sind häufig über Kommunikationsverbindungen mit Kommunikationspartnern verbunden, beispielsweise wenigstens teilweise über das Internet, was auch im Rahmen der vorliegenden Erfindung genutzt werden kann. So kann beispielsweise seitens des Versorgers automatisch oder durch eine Bedienperson überprüft werden, ob sich die Zusammensetzung des Gemischs noch in zulässigem Rahmen befindet.

In einer zweckmäßigen Weiterbildung kann der vorgegebene Messzeitraum einen vorgegebenen Startzeitpunkt, ab dem die Messbedingung überprüft wird, umfassen. Das bedeutet, es wird nicht ständig nach geeigneten Messzeitpunkten für den Ermittlungsvorgang gesucht, sondern der Messzeitpunkt kann für ein am Startzeitpunkt beginnendes Zeitintervall, in dem zumindest zeitweise, beispielsweise in Nächten, die Messbedingungen jeweils überprüft werden, bis der Messzeitpunkt gegeben ist. Auf diese Weise kann beispielsweise eine regelmäßige Überprüfung der Zusammensetzung des Gemischs erreicht werden. Konkret kann beispielsweise vorgesehen sein, dass der Startzeitpunkt das Verstreichen eines Abstandszeitraums, insbesondere eines Jahres, seit der letzten Ermittlung der Zusammensetzungsinformation umfasst. Auf diese Weise kann beispielsweise alle 12 Monate eine die Zusammensetzung des Gemischs überprüfende Messung automatisch angestoßen werden. Der Startzeitpunkt kann also insbesondere ein Datum sein. Auch andere Abstandszeiträume, beispielsweise von 6 Monaten oder 2 Jahren, sind selbstverständlich denkbar.

Grundsätzlich kann der Startzeitpunkt auch den Beginn des vorgegebenen Messzeitraums markieren. Das bedeutet, sobald der Startzeitpunkt, beispielsweise ein bestimmtes Datum, erreicht ist, wird die Messbedingung überprüft und bei ihrer Erfüllung der Ermittlungsvorgang eingeleitet, wobei mit dessen Abschluss unmittelbar ein neuer vorgegebener Messzeitraum festgelegt werden kann, beispielsweise nach dem Abstandszeitraum.

Die Messbedingung muss jedoch nicht zwangsläufig dauerhaft, insbesondere ab dem Startzeitpunkt, überprüft werden, sondern der vorgegebene Messzeitraum kann auch einen, insbesondere wiederholt auftretenden, Zeitabschnitt umfassen, zu dem die Messbedingung konkret zu überprüfen ist. Mit besonderem Vorteil kann es sich bei diesem Zeitabschnitt um die Nächte bzw. ein Uhrzeitfenster während der Nächte handeln, da Anlagen, denen Durchflusszählereinrichtungen zugeordnet sind, unter Umständen nachts nicht oder in geringerem Maße betrieben werden. Auch andere Zeitabschnitte, beispielsweise Wochenendtage, sind je nach Einsatzbereich der Durchflusszählereinrichtung jedoch denkbar.

Mit besonderem Vorteil kann vorgesehen sein, dass die Messbedingung neben der Überprüfung, ob die Temperatur des Gemischs unterhalb der Grenztemperatur liegt, ferner wenigstens eine weitere Teilbedingung umfasst. Das bedeutet, neben der Teilbedingung, dass die Temperatur des Gemischs kleiner als die Grenztemperatur sein soll, können weitere Teilbedingungen vorgesehen werden, die insbesondere einer genaueren Messung zuträglich sein können, um das Vorgehen weiter zu verbessern. So können beispielsweise Genauigkeitsanforderungen an die Messung verbessert erfüllt werden.

Konkret kann beispielsweise vorgesehen sein, dass wenigstens eine der wenigstens einen Teilbedingung überprüft, dass die Temperatur des Gemischs wenigstens über eine vorgegebene Zeitspanne konstant ist. Das bedeutet, die Teilbedingung ist dann erfüllt, wenn die Temperatur sich über eine vorgegebene Zeitspanne nicht oder zumindest nicht wesentlich verändert. Während Versuchen und der allgemeinen Entwicklung des hier beschriebenen Verfahrens hat sich gezeigt, dass eine Fehleranfälligkeit während Temperaturänderungen vorliegen kann. Entsprechend wird vorgeschlagen, dass der Messzeitpunkt erst eintreten soll, wenn vorher sichergestellt wurde, dass sich die Temperatur des Gemischs über die vorgegebene Zeitspanne nicht bzw. vernachlässigbar gering verändert hat. Dann kann davon ausgegangen werden, dass das komplette Zählersystem durchtemperiert ist und die Fehleranfälligkeit abnimmt. Die vorbestimmte Zeitspanne kann beispielsweise 30 bis 300 Minuten, insbesondere 120 bis 180 Minuten, betragen. Insbesondere 2 bis 3 Stunden haben sich als geeigneter Zeitraum für eine hinreichende Temperierung erwiesen.

Eine andere konkrete Ausgestaltung der weiteren Teilbedingung kann bei einer Energiezählereinrichtung vorsehen, dass wenigstens eine der wenigstens einen weiteren Teilbedingung überprüft, ob ein Stillstand einer Anlage, deren Energieverbrauch die Energiezählereinrichtung misst, vorliegt. Dann kann sich der Betrieb der Anlage nicht auf den Ermittlungsvorgang auswirken. Um Fehleranfälligkeiten zu verhindern, kann der Messzeitpunkt ferner also so gewählt werden, dass ein Stillstand der Anlage vorliegt, insbesondere eine Nichtnutzung. Konkret kann hierbei vorgesehen sein, dass ein Stillstand der Anlage festgestellt wird, wenn ein Nulldurchfluss gemessen wird und/oder die Temperaturen am Vorlauf und am Rücklauf wenigstens innerhalb eines Toleranzbereichs übereinstimmen, mithin genau übereinstimmen oder die Abweichung vernachlässigbar gering ist. Die Temperaturmesseinrichtung misst üblicherweise ohnehin die Temperaturen auch am Vorlauf und am Rücklauf, um mittels der Temperaturdifferenz auf den Energieverbrauch rückzuschließen.

In einem weiteren konkreten Beispiel kann auch vorgesehen sein, dass wenigstens eine der wenigstens einen weiteren Teilbedingung überprüft, dass keine Konvektion im Messbereich vorliegt. Auf diese Weise kann die Fehleranfälligkeit weiter minimiert werden, indem eine zusätzliche Überprüfung der Konvektion implementiert wird. Selbst wenn die Anlage nicht in Betrieb ist, kann lokal entlang der Ultraschallmessstrecke noch Konvektion auftreten. Sobald Konvektion detektiert wurde, ist die Ermittlung der Zusammensetzungsinformation zu verschieben. Zur Ermittlung des Vorliegens einer Konvektion kann in einem konkreten Beispiel vorgesehen sein, dass eine entsprechende Sensorik eingesetzt wird, bevorzugt aber wenigstens eine Betriebsgröße, die beispielsweise zu Konvektion führende Temperaturdifferenzen anzeigen kann, ausgewertet wird.

Neben dem Verfahren betrifft die vorliegende Erfindung auch eine Durchflusszählereinrichtung zur Ermittlung des Durchflusses eines Gemischs aus wenigstens zwei Fluiden, insbesondere eines Wasser-Glykol-Gemischs, wobei die Durchflusszählereinrichtung eine Ultraschallmesseinrichtung zur Ermittlung des Gemischdurchflusses durch eine Laufzeitmessung, eine Temperaturmesseinrichtung zur Ermittlung einer Temperatur des Gemischs und eine Recheneinrichtung zur Ermittlung des Durchflusses unter Berücksichtigung des Durchflusses und der Temperatur des Gemisches aufweist, wobei die Durchflusszählereinrichtung zur Durchführung eines erfindungsgemäßen Verfahrens ausgebildet ist. Die Durchflusszählereinrichtung ist insbesondere als Energiezählereinrichtung zur Ermittlung des Energieverbrauchs in einem Temperierungskreislauf, in dem ein Gemisch aus wenigstens zwei Fluiden, insbesondere ein Wasser-Glykol-Gemisch, zirkuliert, ausgebildet, wobei die Energiezählereinrichtung die Ultraschallmesseinrichtung, die Temperaturmesseinrichtung zur Ermittlung einer Temperaturdifferenz zwischen dem Vorlauf und dem Rücklauf des Gemischs und die Recheneinrichtung aufweist und zur Durchführung eines erfindungsgemäßen Verfahrens ausgebildet ist. Insbesondere bedeutet dies, dass die Temperaturmesseinrichtung auch zur Messung der Temperatur des Gemischs im Messbereich der Ultraschallmesseinrichtung ausgebildet ist, wozu die Ultraschallmesseinrichtung zweckmäßig selbst am Vorlauf oder Rücklauf angeordnet ist. Sämtliche Ausführungen bezüglich des erfindungsgemäßen Verfahrens lassen sich analog auf die erfindungsgemäße Durchflusszählereinrichtung übertragen, mit welcher mithin ebenso die bereits genannten Vorteile erhalten werden können.

Die Recheneinrichtung kann konkret wenigstens ein Speichermittel und wenigstens einen Prozessor aufweisen und auch zur Durchführung der Schritte zur Ermittlung der Zusammensetzungsinformation ausgebildet sein. Der Ermittlungszusammenhang kann in dem wenigstens einen Speichermittel bereitgestellt werden. Durch Hardware und/oder Software können Funktionseinheiten gebildet sein, um Schritte des erfindungsgemäßen Verfahrens durchzuführen. Beispielsweise kann eine erste Überprüfungseinheit der Recheneinrichtung ausgebildet sein, zu überprüfen, ob der vorgegebene Messzeitraum erreicht ist. Die Recheneinrichtung kann ferner eine zweite Überprüfungseinheit umfassen, welche die Erfüllung der Messbedingung überprüft. Schließlich kann die Recheneinrichtung auch eine Ermittlungseinheit zur Durchführung des Ermittlungsvorgangs umfassen. Auch weitere Funktionseinheiten sind selbstverständlich denkbar, beispielsweise um Schritte bevorzugter Ausführungsbeispiele und Weiterbildungen des erfindungsgemäßen Verfahrens, aber auch sonstige Funktionalitäten der Durchflusszählereinrichtung umzusetzen. Beispielsweise kann die Recheneinrichtung eine Kommunikationseinheit zur Übermittlung verschiedener Informationen und Daten, insbesondere auch der Zusammensetzungsinformation, an einen Kommunikationspartner aufweisen.

Weitere Vorteile und Einzelheiten der vorliegenden Erfindung ergeben sich aus den im Folgenden beschriebenen Ausführungsbeispielen sowie anhand der Zeichnungen. Dabei zeigen:

Fig. 1     schematisch ein Beispiel für einen Ermittlungszusammenhang,

Fig. 2     einen Ablaufplan eines Ausführungsbeispiels des erfindungsgemäßen Verfahrens,

Fig. 3     schematisch die Zuordnung einer Konzentration zu einer aktuellen Schallgeschwindigkeit und einer aktuellen Temperatur,

Fig. 4     eine erfindungsgemäße Energiezählereinrichtung, und

Fig. 5     den funktionalen Aufbau einer Recheneinrichtung der Energiezählereinrichtung.

Im Folgenden wird ein Ausführungsbeispiel erläutert, um bei einer ultraschallbasierten, als Energiezählereinrichtung ausgebildeten Durchflusszählereinrichtung aus einer mittels der Ultraschallmesseinrichtung gemessenen Schallgeschwindigkeit in einem Gemisch aus wenigstens zwei Fluiden, das auch als Energieträger fungiert, und einer mit der Temperaturmesseinrichtung gemessenen Temperatur des Gemischs eine Zusammensetzungsinformation bezüglich des Gemischs zu ermitteln. Vorliegend wird beispielhaft ein Wasser-Glykol-Gemisch betrachtet, wobei die Zusammensetzungsinformation zumindest einen die Konzentration des Glykols angebenden Zusammensetzungswert umfasst. Der Zusammensetzungswert wird mit der Temperatur und der Schallgeschwindigkeit über einen Ermittlungszusammenhang in Beziehung gesetzt, vorliegend ein Polynom dritten Grades, dessen Koeffizienten anhand von Messreihen empirisch ermittelt wurden, vergleiche Gleichung (1).

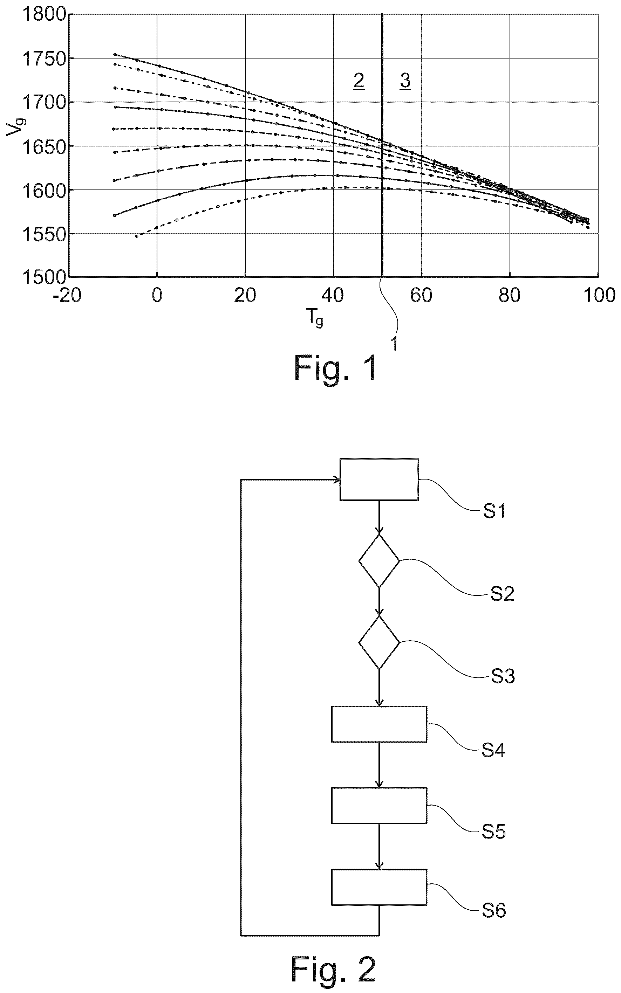

Fig. 1 illustriert den Ermittlungszusammenhang für Monoethylenglykol, indem Teilkurven für eine Konzentration von (von oben nach unten bei niedrigem Wert für die Temperatur $T_g$) 60 %, 55 %, 50 %, 45 %, 40 %, 35 %, 30 %, 25 % und 20 % in der durch die Schallgeschwindigkeit $v_g$ und die Temperatur $T_g$ aufgespannten Ebene gezeigt sind. Ersichtlich existieren zwei durch eine Grenztemperatur 1 getrennte Bereiche 2, 3, wobei in dem Bereich 2 der Ermittlungszusammenhang eindeutig ist, im Bereich 3 jedoch nicht mehr eindeutig. Vorliegend beträgt die Grenztemperatur ca. 52 °C. Basierend auf dieser Erkenntnis und weiteren Betrachtungen wird vorgeschlagen, den Messzeitpunkt intelligent zumindest so zu wählen, dass eine eindeutige Ermittlung der Konzentration, also der Zusammensetzungsinformation, ermöglicht wird.

Fig. 2 zeigt einen Ablaufplan eines Ausführungsbeispiels des erfindungsgemäßen Verfahrens. Dabei wird in einem Schritt S1 zunächst ein Messzeitraum vorgegeben, vorliegend automatisch als ein Jahr nach der letzten Ermittlung der Zusammensetzungsinformation beginnend. Die erste Festlegung kann beispielsweise ausgehend vom Installationsdatum der Energiezählereinrichtung erfolgen. Das bedeutet, der vorgegebene Messzeitraum umfasst einen Startzeitpunkt, kann jedoch auch einen, insbesondere wiederholt auftretenden, Zeitabschnitt umfassen, beispielsweise Nächte bzw. ein Uhrzeitfenster während der Nächte handeln, auf die der Messzeitraum beschränkt wird.

In einem Schritt S2 wird dann überwacht, ob der Messzeitraum beginnt, mithin der Startzeitpunkt erreicht ist. Ist dies der Fall (und liegt zudem, falls ein Zeitabschnitt des Messzeitraums verwendet wird, der entsprechende Zeitabschnitt vor), wird in einem Schritt S3 überprüft, ob eine Messbedingung erfüllt ist. Die Messbedingung ist eine Voraussetzung für einen Ermittlungsvorgang zur Ermittlung der Zusammensetzungsinformation.

Vorliegend überprüft die Messbedingung beispielhaft mehrere Sachverhalte, wobei zunächst in jedem Fall überprüft wird, ob die Temperatur des Gemischs unterhalb der Grenztemperatur 1 liegt. Hierbei wird die gemischspezifische Grenztemperatur 1, die dem entsprechenden gemischspezifischen Ermittlungszusammenhang zugeordnet ist, verwendet. Auf diese Weise wird sichergestellt, dass eine eindeutige Ermittlung der Zusammensetzungsinformation, hier der Konzentration des Glykols, möglich ist.

Im vorliegenden Ausführungsbeispiel muss zur Erfüllung der Messbedingung jedoch nicht nur die Temperatur des Gemischs unterhalb der Grenztemperatur liegen, sondern es wird ferner wenigstens eine weitere Teilbedingung überprüft, um eine möglichst genaue Ermittlung der Zusammensetzungsinformation zu ermöglichen. Zum einen wird überprüft, dass die Temperatur des Gemischs wenigstens über eine vorgegebene Zeitspanne konstant ist, da sich bei Temperaturschwankungen Messungenauigkeiten ergeben können. Die Zeitspanne kann beispielsweise 2 bis 3 Stunden betragen. Darüber hinaus betrifft eine Teilbedingung die Prüfung, ob ein Stillstand einer Anlage, deren Energieverbrauch die Energiezählereinrichtung misst, vorliegt. Dies kann beispielsweise dann festgestellt werden, wenn ein Nulldurchfluss gemessen wird und die Temperaturen am Vorlauf und am Rücklauf wenigstens innerhalb eines Toleranzbereichs übereinstimmen. So wird die Messung auch nicht durch den Betrieb der Anlage beeinflusst. Schließlich kann eine weitere Teilbedingung überwachen, ob Konvektion im Messbereich, also insbesondere entlang der Strecke zwischen den Ultraschalltransducern, vorliegt. Liegt keine Konvektion vor, kann eine genauere Messung erreicht werden.

Ist die Messbedingung erfüllt, wird im Ermittlungsvorgang im Schritt S4 zunächst die aktuelle Schallgeschwindigkeit in dem Gemisch mittels der Ultraschallmesseinrichtung gemessen. Die aktuelle Temperatur in dem Gemisch wird mittels der Temperaturmesseinrichtung erfasst.

Somit kann nun in einem Schritt S5 mittels des Ermittlungszusammenhangs, der beispielsweise gemischspezifisch in einem Speichermittel bereitgestellt sein kann, die Konzentrationsinformation aus der aktuellen Schallgeschwindigkeit und der aktuellen Temperatur bestimmt werden. Die so ermittelte Zusammensetzungsinformation kann in einem Schritt S6 weiterverwendet werden, beispielsweise über eine Kommunikationsverbindung an einen Kommunikationspartner gesendet werden oder aber auch beim internen Betrieb der Energiezählereinrichtung eingesetzt werden, beispielsweise zur Berücksichtigung bei der Ermittlung des Energieverbrauchs bzw. des diesem zugrunde liegenden Durchflusses.

Es wird dann der nächste Messzeitraum gemäß Schritt S1 vorgegeben.

Es sei noch angemerkt, dass bei Energiezählereinrichtungen, die für ein bestimmtes Gemisch vorgesehen sind, der Ermittlungszusammenhang hardcodiert in dem Speichermittel bereitgestellt werden kann. Denkbar ist es in Ausführungsbeispielen jedoch auch, dass der gemischspezifische Ermittlungszusammenhang anhand einer Fluidinformation, die das Gemisch beschreibt, aus mehreren bereitstehenden Ermittlungszusammenhängen ausgewählt wird. Die Fluidinformation kann beispielsweise über ein Eingabemittel der Energiezählereinrichtung bereitgestellt werden, aber auch über die Kommunikationsverbindung oder dergleichen.

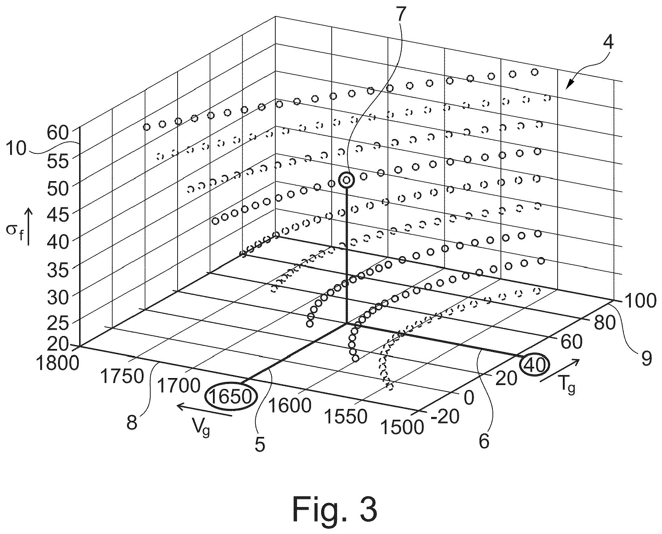

Fig. 3 erläutert kurz grafisch die Herleitung der Konzentration aus der Temperatur und der Schallgeschwindigkeit. In dem dreidimensional visualisierten Graphen ist wiederum die durch den Ermittlungszusammenhang beschriebene Fläche anhand der hier durch Punkte 4 angedeuteten Teilkurven dargestellt. Die Achse 8 betrifft die Schallgeschwindigkeit, die Achse 9 die Temperatur, und die Achse 10 die Konzentration. Kennt man nun die aktuelle Schallgeschwindigkeit 5 und die aktuelle Temperatur 6, lässt sich, da man sich im eindeutigen Bereich 2 befindet, leicht die zugehörige Konzentration 7 ermitteln.

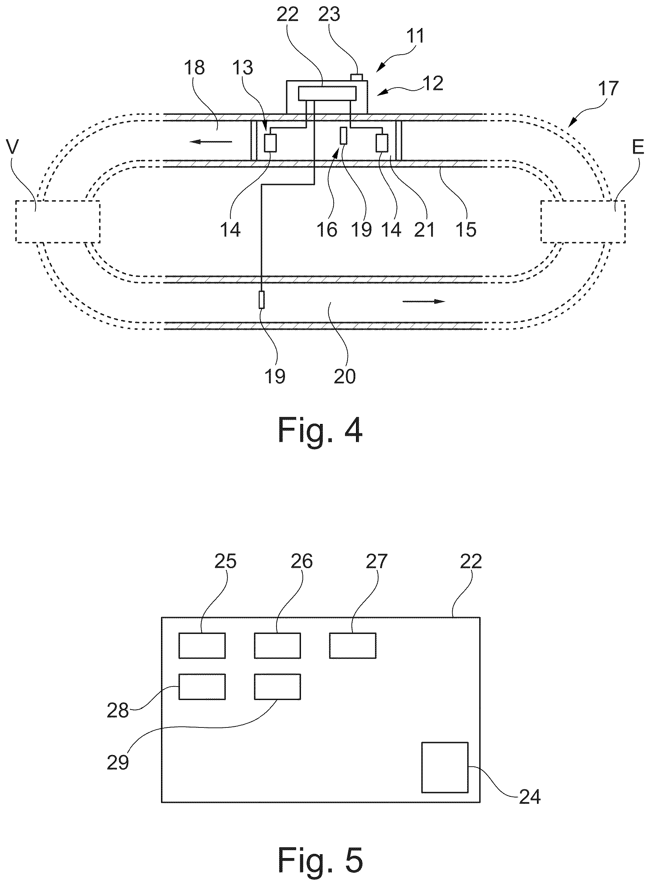

Fig. 4 zeigt in Form einer Prinzipdarstellung eine erfindungsgemäße Energiezählereinrichtung 11 mit einer Messvorrichtung 12. Die Messvorrichtung 12 umfasst eine Ultraschallmesseinrichtung 13, die im gezeigten Beispiel zwei Ultraschalltransducer (Ultraschallmessköpfe) 14 zur Ermittlung des Durchflusses durch ein Strömungsrohr 15 der Messvorrichtung 12 nutzt. Ferner umfasst die Messvorrichtung 12 eine Temperaturmesseinrichtung 16 zur Erfassung einer Temperaturdifferenz zwischen dem Vorlauf und dem Rücklauf eines in einem hier nur angedeuteten Temperierungskreislauf 17 strömenden Gemischs 18, insbesondere eines Wasser-Glykol-Gemischs. Die Messvorrichtung 12 ist in diesen Temperierungskreislauf 17 eingebunden. Die Temperaturmesseinrichtung 16 umfasst zwei Temperatursensoren 19, von denen der eine exemplarisch im Vorlauf 20 und der andere im Rücklauf 21, hier im Strömungsrohr 15 selbst, angeordnet ist. Im Temperierungskreislauf 17 ist wenigstens ein hier ebenso nur angedeuteter Wärme- oder Kälteenergieverbraucher V eingebunden. Ein entsprechender Wärme- oder Kälteenergieerzeuger E ist auf der gegenüberliegenden Seite ebenso angedeutet.

Im vorliegenden Fall ist die Ultraschallmesseinrichtung 13 auch ausgebildet, die Schallgeschwindigkeit $c_g$ des Gemischs 18 zu bestimmen, beispielsweise durch Summierung bzw. Mittelung der Laufzeiten des Ultraschallsignals stromaufwärts und stromabwärts zwischen den Ultraschalltransducern 14. Hierzu kann sie einen entsprechenden Microcontroller aufweisen.

In einer Recheneinrichtung 22 der Messeinrichtung 12 werden die Messdaten der Ultraschallmesseinrichtung 13 sowie der Temperaturmesseinrichtung 16 verarbeitet, um den thermischen Energieverbrauch zu ermitteln. Die Recheneinrichtung 22 ist ferner ausgebildet, ein erfindungsgemäßes Verfahren durchzuführen, um die Zusammensetzungsinformation zu einem Messzeitpunkt im vorgegebenen Messzeitraum zu ermitteln und gegebenenfalls entsprechend zu nutzen bzw. zu übermitteln.

Die Energiezählereinrichtung 11 kann im Übrigen auch, wie bereits erwähnt, ein nicht näher gezeigtes Eingabemittel und/oder eine Kommunikationsschnittstelle 23 aufweisen, um eine Fluidinformation 9 entgegenzunehmen, wenn nicht durch Auswahl eines bestimmten Ermittlungszusammenhangs eine Hardcodierung in einem nicht näher gezeigten Speichermittel der Energiezählereinrichtung 11 vorgenommen wurde.

Fig. 5 zeigt den funktionalen Aufbau der Recheneinrichtung 22 genauer. Die Recheneinrichtung 22 umfasst zunächst ein Speichermittel 24, in dem verschiedene Daten, insbesondere auch der zu verwendende Ermittlungszusammenhang, gespeichert werden kann. Eine Vorgabeeinheit 25 kann zur Vorgabe des Messzeitraum gemäß Schritt S1 ausgebildet sein. Eine erste Überprüfungseinheit 26 der Recheneinrichtung 22 ist ausgebildet zu überprüfen, ob der vorgegebene Messzeitraum erreicht ist, vergleiche Schritt S2. Die Recheneinrichtung 22 umfasst auch eine zweite Überprüfungseinheit 27, welche die Erfüllung der Messbedingung gemäß Schritt S3 überprüft. Eine Ermittlungseinheit 28 dient zur Durchführung des Ermittlungsvorgangs gemäß den Schritten S4, S5. Beispielhaft ist auch eine Kommunikationseinheit 29 zur Übermittlung verschiedener Informationen und Daten, insbesondere auch der Zusammensetzungsinformation gemäß Schritt S6, an einen Kommunikationspartner gezeigt.

Bezugszeichenliste

| | |
|---|---|
| 1 | Grenztemperatur |
| 2 | Bereich |
| 3 | Bereich |
| 4 | Punkte |
| 5 | aktuelle Schallgeschwindigkeit |
| 6 | aktuelle Temperatur |
| 7 | Konzentration |
| 8 | Achse |
| 9 | Achse |
| 10 | Achse |
| 11 | Energiezählereinrichtung |
| 12 | Messvorrichtung |
| 13 | Ultraschallmesseinrichtung |
| 14 | Ultraschalltransducer |
| 15 | Strömungsrohr |

16 Temperaturmesseinrichtung
17 Temperierungskreislauf
18 Gemisch
19 Temperatursensor
20 Vorlauf
21 Rücklauf
22 Recheneinrichtung
23 Kommunikationsschnittstelle
24 Speichermittel
25 Vorgabeeinheit
26 Überprüfungseinheit
27 Überprüfungseinheit
28 Ermittlungseinheit
29 Kommunikationseinheit

S1 bis S6 Schritt

**Patentansprüche**

1. Computerimplementiertes Verfahren zur Ermittlung einer Gemischinformation, die die Zusammensetzung eines Gemischs (18) aus wenigstens zwei Fluiden beschreibt, für eine Durchflusszählereinrichtung zur Ermittlung eines Durchflusses des Gemischs, wobei die Durchflusszählereinrichtung eine Ultraschallmesseinrichtung (13) zur Ermittlung des Gemischdurchflusses durch eine Laufzeitmessung und eine Temperaturmesseinrichtung (16) zur Ermittlung wenigstens einer Temperatur des Gemischs (18) aufweist, **dadurch gekennzeichnet, dass**

   - ein Ermittlungszusammenhang zwischen der Schallgeschwindigkeit in dem Gemisch (18) und der Temperatur in dem Gemisch (18) als Eingangsdaten zu wenigstens einem Zusammensetzungswert der Zusammensetzungsinformation bereitgestellt wird, der wenigstens unterhalb einer Grenztemperatur (1) eindeutig ist,
   - in wenigstens einem vorgegebenen Messzeitraum ein Ermittlungsvorgang zur Ermittlung der Zusammensetzungsinformation dann gestartet wird, wenn eine Messbedingung erfüllt ist, die wenigstens überprüft, ob die Temperatur des Gemischs (18) unterhalb der Grenztemperatur (1) liegt,
   - in dem Ermittlungsvorgang die aktuelle Schallgeschwindigkeit in dem Gemisch (5) mittels der Ultraschallmesseinrichtung (13) gemessen wird und mittels des Ermittlungszusammenhangs die Konzentrationsinformation bestimmt wird.

2. Verfahren nach Anspruch 1, **dadurch gekennzeichnet, dass** der Ermittlungszusammenhang gemischspezifisch, im Falle eines Wasser-Glykol-Gemischs insbesondere glykolspezifisch, bereitgestellt wird.

3. Verfahren nach Anspruch 1 oder 2, **dadurch gekennzeichnet, dass** der Ermittlungszusammenhang vor oder bei Inbetriebnahme der Durchflusszählereinrichtung in einem Speichermittel (24) der Durchflusszählereinrichtung hardcodiert wird oder anhand einer Fluidinformation, die das Gemisch (18) beschreibt, aus mehreren bereitstehenden Ermittlungszusammenhängen ausgewählt wird.

4. Verfahren nach einem der vorangehenden Ansprüche, **dadurch gekennzeichnet, dass** die Zusammensetzungsinformation eine Konzentration eines der Fluide, insbesondere des Glykols, und/oder einen Ermittlungsfaktor zur Ermittlung des Durchflusses umfassend ermittelt wird.

5. Verfahren nach einem der vorangehenden Ansprüche, **dadurch gekennzeichnet, dass** der vorgegebene Messzeitraum einen vorgegebenen Startzeitpunkt, ab dem die Messbedingung überprüft wird, umfasst.

6. Verfahren nach Anspruch 5, **dadurch gekennzeichnet, dass** der Startzeitpunkt das Verstreichen eines Abstandszeitraums, insbesondere eines Jahres, seit der letzten Ermittlung der Zusammensetzungsinformation umfasst.

7. Verfahren nach einem der vorangehenden Ansprüche, **dadurch gekennzeichnet, dass** die Messbedingung neben der Überprüfung, ob die Temperatur des Gemischs (18) unterhalb der Grenztemperatur (1) liegt, ferner wenigstens eine weitere Teilbedingung umfasst.

8. Verfahren nach Anspruch 7, **dadurch gekennzeichnet, dass** wenigstens eine der wenigstens einen Teilbedingung überprüft, dass die Temperatur des Gemischs (18) wenigstens über eine vorgegebene Zeitspanne konstant ist.

9. Verfahren nach Anspruch 7 oder 8, **dadurch gekennzeichnet, dass** wenigstens eine der wenigstens einen weiteren Teilbedingung überprüft, ob ein Stillstand einer Anlage, in der die Durchflusszählereinrichtung misst, vorliegt.

10. Verfahren nach Anspruch 9, **dadurch gekennzeichnet, dass** ein Stillstand der Anlage festgestellt wird, wenn ein Nulldurchfluss gemessen wird und/oder bei einer als Energiezählereinrichtung (11) ausgebildeten Durchflusszählereinrichtung die Temperaturen am Vorlauf (20) und am Rücklauf (21) wenigstens innerhalb eines Toleranzbereichs übereinstimmen.

11. Verfahren nach einem der Ansprüche 7 bis 10, **dadurch gekennzeichnet, dass** wenigstens eine der wenigstens einen weiteren Teilbedingung überprüft, dass keine Konvektion im Messbereich vorliegt.

12. Verfahren nach einem der vorangehenden Ansprüche, **dadurch gekennzeichnet, dass** die Schallgeschwindigkeit aus einem Mittelwert oder einer Summe eines Laufzeitwerts einer Stromabwärts-Messung und eines Laufzeitwerts einer Stromaufwärts-Messung bei zwei in Flussrichtung gegenüberliegenden Ultraschalltransducern (14) ermittelt wird.

13. Durchflusszählereinrichtung zur Ermittlung des Durchflusses eines Gemischs (18) aus wenigstens zwei Fluiden, insbesondere eines Wasser-Glykol-Gemischs, wobei die Durchflusszählereinrichtung eine Ultraschallmesseinrichtung (13) zur Ermittlung des Gemischdurchflusses durch eine Laufzeitmessung, eine Temperaturmesseinrichtung (16) zur Ermittlung einer Temperatur des Gemischs (18) und eine Recheneinrichtung (22) zur Ermittlung des Durchflusses unter Berücksichtigung des Durchflusses und der Temperatur des Gemisches aufweist, **dadurch gekennzeichnet, dass** die Durchflusszählereinrichtung zur Durchführung eines Verfahrens nach einem der vorangehenden Ansprüche ausgebildet ist.

14. Durchflusszählereinrichtung nach Anspruch 13, **dadurch gekennzeichnet, dass** sie als Energiezählereinrichtung (11) zur Ermittlung des Energieverbrauchs in einem Temperierungskreislauf (17), in dem das Gemisch (18) zirkuliert, ausgebildet ist, wobei die Temperaturmesseinrichtung (16) zur Ermittlung einer Temperaturdifferenz zwischen dem Vorlauf (20) und dem Rücklauf (21) des Gemischs (18) ausgebildet ist.

Fig. 1

Fig. 2

Fig. 3

Fig. 4

Fig. 5

Europäisches
Patentamt

European
Patent Office

Office européen
des brevets

**EUROPÄISCHER RECHERCHENBERICHT**

Nummer der Anmeldung

EP 26 15 1991

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 369 305 A1 (KAMSTRUP AS [DK]) 28. September 2011 (2011-09-28) | 1-4,7,8, 12,13 | INV. G01F1/66 |
| Y | * Abbildungen 1, 2 * <br> * Absatz [0003] * <br> * Absatz [0006] * <br> * Absatz [0029] - Absatz [0031] * <br> * Absatz [0018] * <br> * Absatz [0013] * <br> * Absatz [0022] * | 5,6, 9-11,14 | G01F1/667 G01F1/74 G01N29/024 |
| | ----- | | |
| Y | DE 10 2020 001597 A1 (DIEHL METERING GMBH [DE]) 16. September 2021 (2021-09-16) <br> * Absatz [0016] * <br> * Absatz [0038] * | 5,6, 9-11,14 | |
| | ----- | | |
| A | WO 2024/052424 A1 (BELIMO HOLDING AG [CH]) 14. März 2024 (2024-03-14) <br> * Abbildungen 7-9 * | 1-14 | |
| | ----- | | |
| A | DE 10 2008 019991 A1 (MIB GMBH MESSTECHNIK UND INDUS [DE] ET AL.) 29. Oktober 2009 (2009-10-29) <br> * Absatz [0004] - Absatz [0006] * | 1-14 | RECHERCHIERTE SACHGEBIETE (IPC) |
| | ----- | | G01F |
| A | DE 10 2014 001165 A1 (FLOWTEC AG [CH]) 25. Juni 2015 (2015-06-25) <br> * Absatz [0004] - Absatz [0009] * | 1-14 | G01N |
| | ----- | | |

Der vorliegende Recherchenbericht wurde für alle Patentansprüche erstellt

| Recherchenort | Abschlußdatum der Recherche | Prüfer |
|---|---|---|
| Den Haag | 27. Mai 2026 | Régert, Tamás |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 26 15 1991

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-05-2026

| Im Recherchenbericht angeführtes Patentdokument | Datum der Veröffentlichung | Mitglied(er) der Patentfamilie | Datum der Veröffentlichung |
|---|---|---|---|
| EP 2369305 A1 | 28-09-2011 | KEINE | |
| DE 102020001597 A1 | 16-09-2021 | CN 113390537 A<br>DE 102020001597 A1<br>EP 3879251 A1 | 14-09-2021<br>16-09-2021<br>15-09-2021 |
| WO 2024052424 A1 | 14-03-2024 | CN 120153227 A<br>EP 4584561 A1<br>US 20260092798 A1<br>WO 2024052424 A1 | 13-06-2025<br>16-07-2025<br>02-04-2026<br>14-03-2024 |
| DE 102008019991 A1 | 29-10-2009 | DE 102008019991 A1<br>WO 2009129886 A1 | 29-10-2009<br>29-10-2009 |
| DE 102014001165 A1 | 25-06-2015 | DE 102014001165 A1<br>EP 3084414 A1<br>US 2016313160 A1<br>WO 2015090761 A1 | 25-06-2015<br>26-10-2016<br>27-10-2016<br>25-06-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2746742 A1

- WO 2012065276 A1